# EUROPÄISCHE PATENTSCHRIFT

(11) **EP 1 159 216 B1**
(45) Veröffentlichungstag und Bekanntmachung des Hinweises auf die Patenterteilung: **19.03.2003**
(21) Anmeldenummer: 99963538.6
(22) Anmeldetag: 15.12.1999
(51) Int. Cl.: B65H 54/28, H02K 33/18

(54) **FADENFÜHRER ZUM TRAVERSIERENDEN ZUFÜHREN EINES FADENS ZU EINER ROTIEREND ANGETRIEBENEN AUFLAUFSPULE**
THREAD GUIDE FOR TRAVERSING A THREAD IN A ROTATING WINDING BOBBIN
GUIDE-FIL POUR L'AMENEE TRAVERSANTE D'UN FIL A UNE BOBINE RECEPTRICE ENTRAINEE EN ROTATION

(30) Priorität: 18.12.1998 DE 19858548
(43) Veröffentlichungstag der Anmeldung: 05.12.2001
(73) Patentinhaber: W. SCHLAFHORST AG & CO., 41061 Mönchengladbach (DE)
(72) Erfinder: HERMANNS, Ferdinand-Josef, D-41812 Erkelenz (DE); FLAMM, Franz-Josef, D-52224 Stolberg (DE); STURM, Christian, D-47798 Krefeld (DE)
(74) Vertreter: Hamann, Arndt, Dipl.-Ing.
(86) Internationale Anmeldenummer: EP9909946
(87) Internationale Veröffentlichungsnummer: WO00037346

(56) Entgegenhaltungen:
- EP-A- 0 347 626
- EP-A- 0 808 791
- EP-A- 0 838 422
- EP-A- 0 924 843
- DE-A- 19 820 464
- US-A- 4 398 167
- US-A- 5 523 911

## Beschreibung

Die Erfindung betrifft einen Fadenführer zum traversierenden Zuführen eines Fadens zu einer rotierend angetriebenen Auflaufspule für die Erzeugung einer Kreuzspule in einer Spuleinrichtung einer Textilmaschine mit den Merkmalen des Oberbegriffes des ersten Anspruches.

Um Textilspulen zu erzeugen, ist es prinzipiell notwendig, zum einen die Spule in Rotation zu versetzen und zum anderen den auf die rotierende Spule auflaufenden Faden längs der Spulenachse zu traversieren. Wird der Faden sehr langsam traversiert, entsteht eine Spule mit weitestgehend parallelen Windungen. Soll eine solche Spule ein größeres Volumen und im wesentlichen rechtwinklig zur Spulenachse angeordnete flache Stirnseiten besitzen, sind beidseits der Wicklung Begrenzungsscheiben erforderlich. Diese Begrenzungsscheiben können vermieden werden, wenn der Faden so schnell traversiert wird, daß sich eine Kreuzbewicklung ergibt. Hohe Wicklungsgeschwindigkeiten erfordern dann auch eine sehr hohe Traversierrate.

Hierfür können parallel zur Spulenachse orientierte Antriebsmittel, wie zum Beispiel Riemen, eingesetzt werden. Die EP 0 311 827 A2 beschreibt einen solchen Fadenführer, bei dem der Riemen mittels eines mikroprozessorgesteuerten Schrittmotors angetrieben wird. Dabei können hohe Changiergeschwindigkeiten erzielt und der Fadenführer relativ präzise gesteuert werden.

Sehr verbreitet zur Erzeugung der Changierbewegungen sind auch sogenannte Kehrgewindewalzen, die bei schnell laufenden Spulmaschinen oftmals gleichzeitig den Umfangsantrieb für die Kreuzspule bewirken. Dabei ist jedoch ein, unabhängig von der Spulenfülle, immer gleicher Verlegewinkel gegeben, wobei bei bestimmten Drehzahlverhältnissen zwischen Spule und Antriebswalze sogenannte Wicklungsbilder entstehen, die beim späteren Abspulen zu erheblichen Problemen führen. Deshalb sind im Stand der Technik eine Vielzahl von sogenannten Bildstörverfahren beschrieben.

Um ein vorgegebenes Wicklungsbild, zum Beispiel eine Präzisions- oder Stufenpräzisionswicklung, erzeugen zu können, muß deshalb der Antrieb der Spule vom Fadenführer getrennt werden. Dies ist unter anderem auch dadurch möglich, daß die bereits erwähnte Kehrgewindewalze beabstandet von der Auflaufspule angeordnet wird, die separat angetrieben ist. In der Kehrgewindenut gleitet dann in der Regel ein Fadenführer. Dieses System ist trägheitsbedingt mit Nachteilen belastet.

Seit langem sind auch sogenannte Fingerfadenführer bekannt (zum Beispiel DE-AS 11 31 575, DE-OS 15 60 360), bei denen ein fingerartiger Fadenführer um eine im wesentlichen senkrecht zur Auflaufspulenachse angeordnete Achse schwenkbar ist. Anstelle der dort beschriebenen konventionellen mechanischen Antriebe dieser als Fadenführer dienenden Finger sind mittlerweile elektromechanische Antriebe vorgeschlagen worden, wie sie beispielsweise in der EP 0 808 791 A2 oder der gattungsbildenden EP 0 838 442 A1 angedeutet sind. Jedoch wird in diesen Dokumenten lediglich erwähnt, daß es sich um einen Elektromotor handelt. Es kann davon ausgegangen werden, daß entweder die Rotationsbewegung des Motors über die Regelträgheit erhöhende Getriebemittel in eine Schwenkbewegung des Fadenführerfingers umgewandelt wird oder ein Motor eingesetzt ist, der direkt den Fadenführerfinger antreibt und im Falle eines Schrittmotors über eine vorgebbare Schrittanzahl den gewünschten Schwenkwinkel erzeugt. Bei der hohen Geschwindigkeit und der hochfrequenten Bewegungsrichtungsumkehr können Schrittfehler auftreten, die dann zu einer dauerhaften Verstellung des Antriebes und in der Folge Verlegefehlern führen.

Im übrigen ist es bei konventionellen Elektromotoren, zum Beispiel elektronisch kommutierten Motoren, schwierig, einerseits ein in den Umkehrpunkten erforderliches hohes Moment zu erzeugen, andererseits aber die Masse des nur eine Schwenkbewegung ausführenden Rotors so gering zu halten, daß nicht die resultierende Massenträgheit das erforderliche Moment weiter erhöht.

Es ist deshalb Aufgabe der Erfindung, den Antrieb eines gattungsgemäßen Fadenführers zu verbessern.

Diese Aufgabe wird erfindungsgemäß durch die kennzeichnenden Merkmale des ersten Anspruches gelöst.

Die Erfindung ist vorteilhaft durch die Merkmale der Ansprüche 2 bis 19 weitergebildet.

Innerhalb des erfindungsgemäßen Luftspaltes kann eine relativ hohe Magnetflußdichte erreicht werden, wobei die Verluste bei geringer Dimensionierung des Luftspaltes und ausreichender Dimensionierung der einen geringen magnetischen Widerstand aufweisenden Joche gering sind. Durch Bestromen der Spule, die sich im Bereich der Magnetfeldlinien befindet, wird das zum Auslenken des Fadenführers erforderliche Moment erzielt.

Die Dimensionierung der Spule steht in engem Zusammenhang mit der Anpassung an die Spaltbreite des erfindungsgemäßen, durch Magnetlinien durchfluteten Luftspaltes. Der Abstand der im-Luftspalt verlaufenden Windungsstränge der Spule zur Schwenkachse des Fadenführers bestimmt die durch den Antrieb erzeugbare Größe des Momentes. Dieses Moment ist im Verhältnis zur Massenträgheit der Spule hoch. Die übrigen Teile des an der Schwingung beteiligten Körpers lassen sich aus sehr leichtem Werkstoff fertigen und müssen lediglich die für die auftretenden Kräfte erforderliche Stabilität besitzen, so daß sich eine geringe Massenträgheit ergibt.

Der Luftspalt und damit auch alle Elemente zur Erzeugung des magnetischen Feldes brauchen sich lediglich über den Schwenkbereich der elektrischen Spule zu erstrecken, der dem maximal einstellbaren Traversierhub des Fadenführers entspricht. Damit ist der bauliche Aufwand entsprechend eingeschränkt. Ebenso ist nur eine elektrische Spule erforderlich, die sich während des Schwingens entlang des entsprechend dimensionierten Schlitzes auf und ab bewegt. Wie erwähnt, ist es von besonderere Bedeutung, daß die an der Schwenkbewegung teilnehmenden Elemente eine möglichst geringe Masse aufweisen, da im Bereich der Totpunkte der Schwingung des Fadenführers erhebliche Winkelbeschleunigungen zu realisieren und demzufolge bei hoher Massenträgheit der schwingenden Teile sehr hohe Momente aufzubringen sind. Hier ist zu berücksichtigen, daß bei der Herstellung von Kreuzspulen auf Spulmaschinen Schwingfrequenzen des Fadenführers im Bereich bis zu 30 Hz erforderlich sind.

Zur Erzeugung des Magnetfeldes ist es bereits ausreichend, wenn auf einer Seite des Luftspaltes Magnete angeordnet sind. Auf der gegenüberliegenden Seite des Luftspaltes ist dann unmittelbar ein Joch angeordnet, ebenso auf der Rückseite der Mangnetanordnung. Damit verlaufen die Magnetfeldlinien über -den größten Teil innerhalb guter magnetischer Leiter. Der Luftspalt kann, wie weiter oben bereits beschrieben, gering dimensioniert werden, so daß sich der magnetische Widerstand ebenfalls begrenzt.

Es ist jedoch auch möglich, beiderseits des Luftspaltes Magnete anzuordnen, wodurch sich die Magnetflußdichte weiter erhöht und größere Momente erzielt werden können.

Die Magnete können alternativ Permanentmagnete, die nicht an eine Stromversorgung angeschlossen werden müssen, oder Elektromagnete sein, mit denen eine höhere Magnetflußdichte und damit noch größere Leistung erzielbar ist.

Bei der im Anspruch 7 beschriebenen Anordnung ist sichergestellt, daß auf die beiden Wicklungsstränge der elektrischen Spule jeweils das gleiche Moment mit der gleichen Orientierung zur Einwirkung gebracht wird. Dies ergibt sich aus der entgegengesetzten Stromflußrichtung sowie den entgegengesetzten Magnetflußrichtungen. Dabei muß darauf hingewiesen werden, daß zwar eine gleiche Richtung der Momente erforderlich ist, um das System mit hohem Wirkungsgrad zu betreiben, es jedoch nicht zwingend notwendig ist, daß auch der Betrag der Momente in beiden Wicklungssträngen identisch ist. Ein unterschiedlicher Betrag könnte sich zum Beispiel ergeben, wenn die Magnetfelder unterschiedlich stark sind oder sich die Verläufe der Wicklungsstränge innerhalb der ihnen jeweils zugeordneten Magnetfelder voneinander unterscheiden.

Gegenüber einem elektronisch kommutierten Motor, bei dem eine Kommutierung während der gleichbleibenden Wirkungsrichtung des Antriebsmomentes notwendig ist, führt bei vorliegender Erfindung eine Stromrichtungsänderung unmittelbar zur Umkehr des Vorzeichens des Antriebsmomentes. Dies wiederum vereinfacht die Ansteuerung des Direktantriebes des schwingenden Fadenführers.

Eine besonders vorteilhafte Anordnung des Luftspaltes und der zugehörigenden elektrischen Spule ist in den Ansprüchen 8 und 9 beschrieben. Dabei sind die zur Erzeugung des Momentes erforderlichen und im Luftspalt verlaufenden Windungsstränge der elektrischen Spule vollständig in relativ großem Abstand zum Drehpunkt des Fadenführers angeordnet, so daß aufgrund der Hebelwirkung ein relativ hohes Moment erzeugt werden kann.

Demgegenüber ist bei der erfindungsgemäßen Ausbildung, wie sie in den Ansprüchen 10 und 11 beschrieben ist, ein Teil der momenterzeugenden Wicklungsstränge der elektrischen Spule relativ nah am Drehpunkt des Fadenführers angeordnet. Dabei ist darauf hinzuweisen, daß hinsichtlich der Entfernung vom Drehpunkt hier entsprechende Grenzen einzuhalten sind, da die Spule mit größer werdendem Abstand vom Drehpunkt auch zunehmend ein dem Antrieb entgegenwirkendes Trägheitsmoment erzeugt. In diesem Beispiel liegt jedoch ein großer Teil der Wicklung der elektrischen Spule, der nicht an der Momenterzeugung beteiligt ist, radial weiter außen als die Wicklungsstränge, die an der Momenterzeugung beteiligt sind. Dieser hinsichtlich des Antriebsmomentes passive Teil der Spule trägt aber aufgrund seines großen Abstandes vom Drehpunkt des Fadenführers zu einem höheren Trägheitsmoment des Fadenführers bei.

Insgesamt handelt es sich aber auch bei dieser Variante der Erfindung um eine Antriebseinrichtung, die sich sehr leicht steuern beziehungsweise regeln läßt, einfach aufgebaut ist und einen hohen Wirkungsgrad aufweist.

Die Größe und Richtung des Momentes wird durch Steuern beziehungsweise Regeln des Stromes in jeder Phase der Bewegung eingestellt. Dies kann über eine Steuereinrichtung in Form eines Mikroprozessors erfolgen, der Spannung bzw. Stromstärke und Stromrichtung nach einem vorgebbaren Programm winkel- und zeitabhängig so steuert, daß sich über die Traversierbreite der jeweils gewünschte Verlegewinkel des Fadens ergibt beziehungsweise auch die Traversierbreite oder die Traversierendpunkte eingestellt werden können. Durch entsprechende Sensorik wird der jeweilige Winkel erfaßt, die Einhaltung des Soll-Wertes überprüft und erforderlichenfalls der Ist-Wert dem Soll-Wert durch Regeln wieder angepaßt. Hierzu lassen sich bekannte PID-Regler einsetzen, während zur Erfassung des Momentanwinkels zum Beispiel eine bekannte Infrarotlichtschranke eingesetzt werden kann, die konzentrisch zur Schwingachse angeordnete Markierungen abtastet.

Wie bereits weiter oben erwähnt, ist das über den größten Teil des Hubweges aufzubringende Moment sehr gering, während aufgrund der sehr hohen Winkelbeschleunigung in den Umkehrpunkten des Fadenführers in diesem Bereich sehr hohe Momente zu erzeugen sind. Um die entsprechend hohen Spannungswerte für das sprunghaft intensivere Bestromen der elektrischen Spule mittels einer bekannten Endstufe zu erzeugen, muß diese Endstufe mit einer hohen Betriebsspannung betrieben werden. Außerdem erweist sich die Erzeugung einer schlagartigen Spannungsänderung, wie sie hier notwendig ist, innerhalb einer bekannten Endstufe als schwierig. Bei der üblichen digitalen Ansteuerung einer Endstufe über Pulsweitenmodulation müßten sich aufgrund der geforderten Spannungsspitzen extrem geringe Pulsweiten mit extrem großen Pulsweiten abwechseln. Diese extrem geringen Pulsweiten stellen erhöhte Anforderungen an die Steuerungstechnik. Des weiteren würde bei für den weit überwiegenden Teil der Betriebszeit deutlich zu hoher Betriebsspannung die zur Einstellung der erforderlichen geringen Spannung notwendige Pulsweitenmodulation zu einer erheblichen Verlustleistung führen.

Um diese Nachteile zu umgehen, wird weiterhin erfindungsgemäß vorgeschlagen, eine zweite Versorgungsspannungsquelle vorzusehen, an der eine gegenüber der ersten Versorgungsspannungsquelle mehrfache Betriebsspannung bereitsteht. Diese zweite Versorgungsspannungsquelle wird in den Umkehrpunkten des Fadenführers auf die elektrische Spule geschaltet, so daß das hier erforderliche schlagartig benötigte hohe Moment zur Verfügung steht, ohne daß insgesamt mit einer hohen Verlustleistung zu rechnen ist.

Durch die Verwendung eines entsprechend dimensionierten Kondensators kann an der zweiten Versorgungsspannungsquelle schlagartig die notwendige Spannung bereitgestellt werden. Durch diesen Kondensator wird auch abgesichert, daß diese Spannung nicht frühzeitig zusammenbricht.

Besonders vorteilhaft ist es, wenn der Kondensator mittels einer Ladungspumpe jeweils zwischen zwei Freischaltungen des Kondensators aufgeladen wird. In Abhängigkeit von der Frequenz des Schwingsystemes kann dabei die Ladungspumpe so eingestellt werden, daß die erforderliche Ladedauer der Zeit zwischen zwei aufeinanderfolgenden Freischaltungen entspricht. Dadurch ist ein kontinuierlicher Betrieb der Ladungspumpe möglich.

Die erzielbare höhere Winkelbeschleunigung verkürzt die Verweilzeit des Fadenführers und damit auch des Fadens im Bereich der Endpunkte der Changierbreite. Dies wiederum führt zu einer Vergleichmäßigung der Dichte der Kreuzspule, indem die Verweilzeit des Fadens in den Randzonen der Verweilzeit im übrigen Bereich der Kreuzspule angenähert wird.

Der erfindungsgemäße elektromechanische Antrieb weist dabei noch den Vorteil auf, daß eine sehr hohe Spannung mit der Folge eines sehr hohen Momentes auf die elektrische Spule aufgebracht werden kann, ohne daß es zu Sättigungserscheinungen wie bei einem üblichen Elektromotor kommt. Durch die mittels zweiter Versorgungsspannungsquelle oder Kondensatorentladung schlagartig zur Verfügung stehende hohe Spannung steigt der durch die elektrische Spule getriebene Strom deutlich schneller an, so daß auch das proportionale Drehmoment entsprechend schnell ansteigen kann.

Zur Unterstützung der Bewegungsrichtungsumkehr ist es im Rahmen vorliegender Erfindung auch möglich, in an sich bekannter Weise an den Umkehrpunkten mechanische Energiespeicher einzusetzen. Dadurch verringert sich das in diesen Bereichen notwendige Momentmaximum. Jedoch muß der Fadenführer, der, wie erwähnt, zur Minimierung des Trägheitsmomentes möglichst leicht sein soll , deutlich stabiler und damit schwerer ausgestaltet werden. Außerdem wird der Fadenführer lauter und hat eine geringere Lebensdauer. Nicht zuletzt leidet durch Momentsprünge beim Einlaufen des Fadenführers in die Energiespeicher die Regelgüte des Reglers.

Der Einsatz eines Energiespeichers, der mit dem Fadenführer ein im wesentlichen harmonisch oszillierendes mechanisches System bildet, führt zu einer Entlastung des Antriebes, das heißt, einer Reduzierung der diesem zuzuführenden Energie und hat nicht die beschriebenen Nachteile der nur im Randbereich angeordneten Federn. Der Energiespeicher reduziert die Fläche unter dem Graphen des Antriebsmomentenquadrates auf bis zu einem Drittel des Wertes, der ohne einen solchen Energiespeicher notwendig wäre. Dies bedeutet vor allem, daß auch bei hoher Beanspruchung der Antrieb nicht überhitzt wird. Dabei ist zu berücksichtigen, daß das Problem durch eine großzügigere Dimensionierung des Antriebes in vielen Fällen nicht zu lösen wäre, da die Spulenmasse die Massenträgheit der schwingenden Teile und damit wiederum das zur Schwingungserzeugung notwendige Moment vergrößert.

Als Energiespeicher kommt eine Feder, insbesondere eine Drehfeder, in Frage. In der hier interessierenden Auslenkung von etwa 30° nach links und rechts ist eine Spiralfeder, insbesondere aus Bandmaterial, vorteilhaft einsetzbar, da in diesem Bereich in beiden Richtungen von einem gleichen Anstieg der Federkennlinie auszugehen ist.

Anstelle einer Spiralfeder ist auch der Einsatz von zwei Spiralfedern möglich, wodurch sich noch besser der gewünschte Verlauf der resultierenden Federkennlinie einstellen läßt. Außerdem können die zum Beispiel beiderseits des schwingenden Teiles angeordneten Spiralfedern der Stromzuführung zur elektrischen Spule dienen.

Um sicher zu gehen, daß in beiden Schwingungsrichtungen der gleiche Federkraftverlauf erreicht wird, sollten die Spiralfedern entgegengesetzte Windungsrichtungen aufweisen.

Dieses Erfordernis gewinnt aber erst dann'an Bedeutung, wenn der Winkel der Auslenkung aus der Ruhestellung des Fadenführers einen Grenzwert übersteigt, da sich der Verlauf der Federkennlinie beim Öffnen und Schließen der Feder dann unterscheidet.

Dies kann aber auch schon bei einer geringeren Schwingamplitude der Fall sein, wenn im Bereich der Bewegungsrichtungsumkehr bereits ein progressiver Verlauf der Federkennlinien auftritt . Diese Federauswahl unterstützt den Antrieb in dem Bereich, in dem das größte Moment erforderlich ist.

Die Erfindung soll nachfolgend anhand von Ausführungsbeispielen näher erläutert werden. In den zugehörigen Zeichnungen zeigen :
- Fig. 1: eine Vorderansicht eines erfindungsgemäßen Fadenführers mit elektromechanischem Antrieb, teilweise geschnitten an I-I gem. Fig. 2,
- Fig. 2: ein Schnitt II-II zu Fig. 1,
- Fig. 3: eine Vorderansicht einer Variante zu Fig. 1, teilweise geschnitten an III-III gem. Fig.4,
- Fig. 4: ein Schnitt IV-IV zu Fig. 3,
- Fig. 5: eine weitere Variante zu Fig. 1, ohneSeitenwand 9,
- Fig. 6: eine alternative Ausbildung des Antriebs des Fadenführers in Vorderansicht gemäß Schnittlinie VI-VI in Fig. 7,
- Fig. 7: die der Fig. 6 zugehörige Seitenansicht an VII-VII,
- Fig. 8: ein Blockschaltbild einer Endstufe und
- Fig. 9: eine Variante zu Fig. 8.

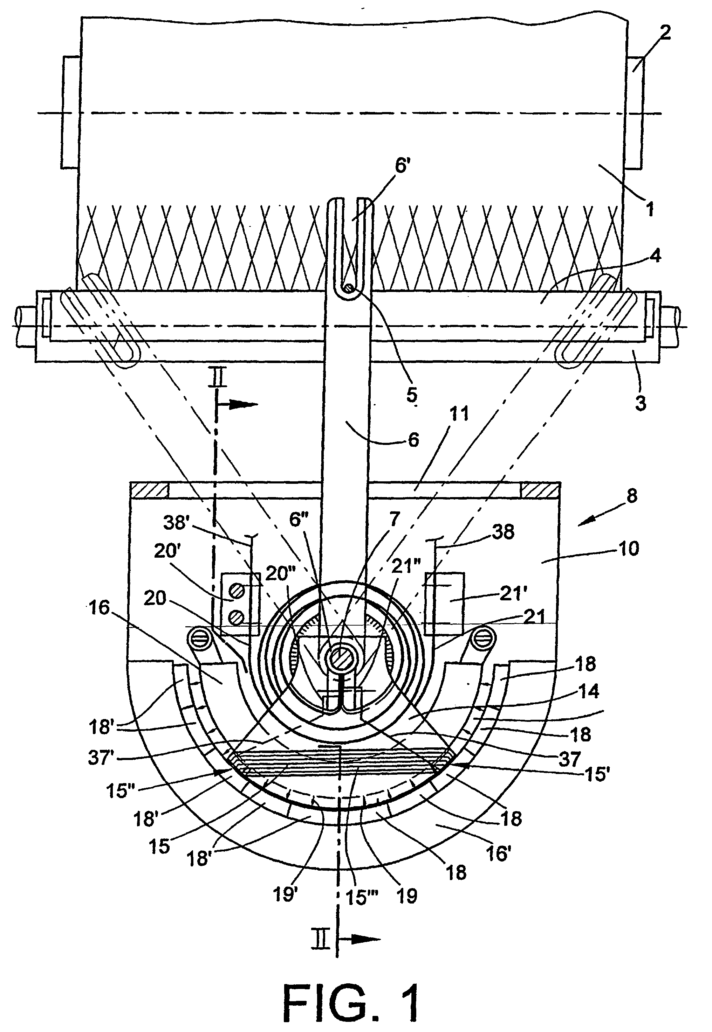

Bei dem in Fig. 1 dargestellten Ausschnitt einer Spuleinrichtung ist eine Kreuzspule 1 zu erkennen, die auf einer Stützwalze 3 aufliegt. Die Kreuzspule 1 ist mit ihrer Spulenhülse 2 in einem nicht dargestellten Spulenrahmen gelagert. Der Antrieb der Kreuzspule kann über einen der Hülsenteller des Spulenrahmens erfolgen, die die Spulenhülse 2 zwischen sich klemmen. Alternativ kann anstelle der Stützwalze 3 eine Antriebswalze vorgesehen werden, durch die im Vergleich zu dem genannten direkten Antrieb der Kreuzspule 1 ein Umfangsantrieb erfolgt.

Der der Kreuzspule 1 zugeführte Faden 5 wird innerhalb eines gabelförmigen Führungselementes 6' des Fadenführers 6 geführt. Ein Changierlineal 4 sorgt für die Geradführung des Fadens, die erforderlich ist, damit der Faden immer in einem gleichbleibenden und möglichst kurzen Abstand zur Klemmlinie zwischen Stützwalze 3 und Kreuzspule 1 der Kreuzspule zugeführt wird. Dies ist zur Erzielung einer zufriedenstellenden Bewicklungstruktur der Kreuzspule 1 erforderlich.

Anstelle der Geradführung über das Changierlineal 4 wäre auch denkbar, einen eine Fadenführungsöse enthaltenden Körper, der entlang der Position des Changierlineals 4 verschiebbar gelagert ist, mit einem Hebel anzutreiben, der dem Fadenführer 6 entspricht. Hierbei ist jedoch zu bedenken, daß dadurch zusätzliche Trägheits- und Reibungskräfte zu überwinden sind, die sich bei hohen Changierfrequenzen nachteilig auf das Gesamtsystem auswirken.

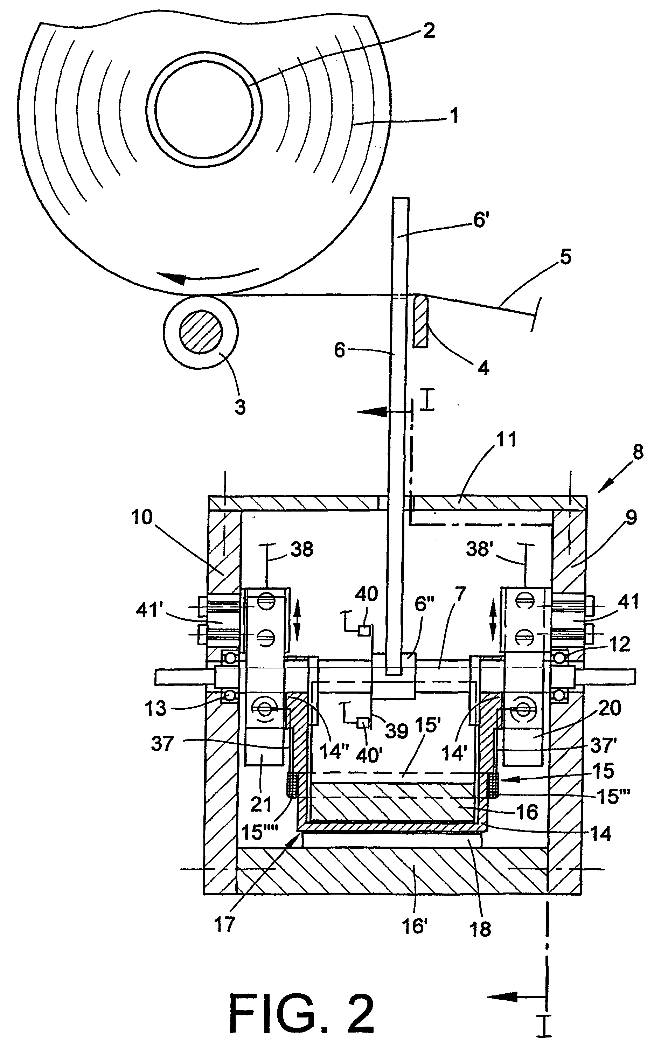

Der Fadenführer 6 ist über eine Halterung 6'' auf einer Welle 7 befestigt. Diese Welle 7 ist, wie aus Fig. 2 ersichtlich, ihrerseits in Wälzlagern 12 und 13 gelagert, die in Seitenwänden 9 und 10 eines Gehäuses 8 angeordnet sind. Um das trägheitsbedingte Weiterdrehen der Wälzkörper bei der Bewegungsrichtungsumkehr des Fadenführers 6 zu begrenzen, kann das Wälzlager stärker als üblich verspannt werden. Alternativ ist aber auch denkbar, andere Lager, zum Beispiel auf magnetischer Basis, einzusetzen.

Ebenfalls auf der Welle 7 befestigt ist ein schaukelförmiger Spulenträger 14. Seitliche zungenförmige Ausleger 14' und 14'' dieses Spulenträgers sind mit einer nach innen ragenden Zunge der aus metallischem Bandmaterial hergestellten Spiralfedern 20 und 21 drehfest verbunden. Die beiden Spiralfedern 20 und 21 sind in entgegengesetzten Drehrichtungen gewickelt. Eine Spule 15 ist auf den Spulenträger 14 so gewickelt, daß deren Mittelachse die Drehachse des Fadenführers 6 schneidet.

An den Seitenwänden 9 und 10 des Gehäuses 8 sind Halterungen 20' und 21' der Drehfedern 20 und 21 befestigt. In diese Halterungen 20' und 21' sind die beiden Drehfedern 20 und 21 fest eingespannt.

Wie in Fig. 2 durch Doppelpfeile angedeutet, sind die Halterungen in ihrer Position bezüglich der Seitenwände 9 und 10 durch Verschieben in Langlöchern 41 und 41' justierbar. Diese Justierbarkeit ist zumindest für eine der beiden Halterungen erforderlich, um zu erreichen, daß der Fadenführer 6 in seiner Ruhelage die Mittenlage im Bereich der Schwingungsamplitude einnimmt. Die Justierung beider Drehfedern ermöglicht, daß diese Mittenlage gleichzeitig den Nullpunkt beider Federkennlinien darstellt.

Die Stromzuführung zur Spule 15 erfolgt über Zuleitungen 38 und 38' zu den Halterungen 20' und 21', über die Drehfedern 20 und 21 bis zu deren Befestigungspunkten an der Welle 7 und von dort über Zuleitungen 37 und 37' zur Spule 15. Auf diese Weise wird gewährleistet, daß die jeweiligen festen Zuleitungen keiner Relativbewegung ausgesetzt sind. Die Relativbewegung wird von den Spiralfedern 20 und 21 aufgenommen. Selbstverständlich sind jedoch auch andere Zuleitungen denkbar, die eine hohe Flexibilität besitzen. Um dabei die Bewegung einzugrenzen, sollten diese Zuleitungen möglichst nahe an der Achse 7 liegen.

Ein aus ferromagnetischem Material bestehendes Innenjoch 16 hat, wie in Fig. 1 ersichtlich, die Form eines Ringsegmentes und, wie aus Fig. 2 ersichtlich, einen rechteckigen Querschnitt. Gegenüber dem Außenumfang des ringsegmentartigen Innenjoches 16 ist auf einem ebenfalls ringsegmentartigen Außenjoch 16' eine Magnetanordnung 18, 18' befestigt. Zwischen dem Außenumfang des Innenjoches 16 und der Magnetanordnung 18, 18' ist ein Luftspalt 17 ausgebildet, der eine über seine Länge gleichbleibende Spaltbreite aufweist. Diese gleichbleibende Spaltbreite ist jedoch kein zwingendes Erfordernis. So könnte beispielsweise der Luftspalt 17 jeweils in der Mitte der linken und der rechten Hälfte des Luftspaltes 17 breiter sein und dadurch das Magnetfeld schwächen, da sich die aktiven Windungsstränge 15 und 15' dort befinden, wenn der Fadenführer 6 seine Mittenposition einnimmt, in der nur ein geringes oder kein Antriebsmoment benötigt wird.

Die Magnete sind links und rechts des Mittelpunktes des Schwenkweges der Spule 15 unterschiedlich gepolt. Dadurch ergeben sich im Bereich der Magnete 18 Magnetflußlinien 19, die im wesentlichen auf den Drehpunkt des Fadenführers ausgerichtet sind, während im Bereich der Magnete 18' Magnetfeldlinien 19' ausgebildet sind, die vom Drehpunkt des Fadenführers wegzeigen.

Die durch die Joche 16 und 16' verlaufenden Feldlinien sind aus Übersichtsgründen nicht dargestellt. Sie bilden jedoch in beiden Jochen 16 und 16'Brücken aus , wobei durch die Mitte der U-förmigen Joche alle Magnetfeldlinien verlaufen. Deshalb ist es auch möglich, die Joche im Randbereich mit einem deutlich reduzierten Querschnitt gegenüber der Mitte auszubilden.

In jedem der beiden Teile des Luftspaltes 17, die sich durch die Richtung der Magnetfeldlinien unterscheiden, verläuft während der gesamten Schwenkbewegung des Fadenführers 6 jeweils einer der beiden Wicklungsstränge 15' beziehungsweise 15'' der elektrischen Spule 15. Da sich aufgrund der Wicklungsebene der Spule 15 in den beiden Wicklungssträngen 15' und 15'' zwangsläufig auch unterschiedliche Stromrichtungen ergeben, ist das durch die Magnetfeldlinien 19 und 19' dargestellte Magnetfeld auf die Windungsstränge 15 und 15' ausgeübte Moment mit dem gleichen Vorzeichen versehen. Der Bogenabstand der beiden Windungsstränge 15' und 15'' zueinander ist größer als der bei einem maximalen Schwenkwinkel des Fadenführers 6 entlang des Luftspaltes 17 zurückgelegte Weg. Dadurch verbleibt während des gesamten Schwenkweges jeder der beiden Windungsschenkel 15' und 15'' innerhalb eines Bereiches des Luftspaltes, in dem die Magnetfeldlinien 19 beziehungsweise 19' in derselben Richtung verlaufen. Dadurch ist über den gesamten Schwenkweg Strom und Moment, insbesondere in Bezug auf die Vorzeichen, proportional. Dadurch läßt sich der Steuer- beziehungsweise Regelungsaufwand gering halten.

Das Gehäuse 8 ist mit einem Deckel 11 versehen, der einen Schlitz enthält, in dem der Fadenführer 6 bewegbar ist. Anstelle der mittigen Anbringung des Fadenführers 6 auf der Welle 7 ist es auch möglich, diesen Fadenführer außerhalb des Gehäuses 8 auf der Welle 7 festzulegen, wodurch das Gehäuse 8 vollständig gekapselt werden kann.

Auf der Welle 7 im Bereich der Halterung 6'' des Fadenführers 6 ist eine Scheibe 39 angeordnet, die konzentrisch zur Mittelachse der Welle 7 Markierungen trägt. Diese Markierungen werden mit zwei Infrarot-Lichtschranken 40, 40' abgetastet. Durch eine bezüglich der Teilung der Markierungen versetzte Anordnung der beiden Infrarotlichtschranken 40, 40' ist es möglich, die jeweilige Richtung der Bewegung der Scheibe festzustellen. Somit ist die jeweilige Winkelstellung des Fadenführers 6 durch Zählen der Inkremente feststellbar. Um die Anzahl der Inkremente über den Schwenkweg weiter zu erhöhen, ist es möglich, weitere Infrarot-Lichtschranken vorzusehen, wobei sich dadurch die Anzahl der Inkremente für den gleichen Schwenkwinkel entsprechend erhöht. Um jedoch auch im Bereich der Umkehrpunkte des Fadenführers eine ausreichend hohe Auflösung für den Regler zu haben, bietet sich der Einsatz eines Beobachters an, wie er zum Beispiel in der DE 19 73 5581 A1 beschrieben ist. Die vom Infrarotsensor 40 gemessenen Inkremente werden an einen nicht dargestellten Mikroprozessor weitergegeben, in dem sowohl ein Sollverlauf der Schwingung des Fadenführers gespeichert als auch ein Regler angeschlossen ist, der als Stellgröße den Strom I, der durch die Spule 15 fließt, ausgibt. Damit kann über den gesamten Schwingungsverlauf das gewünschte Antriebsmoment erzeugt werden. Der Regler kann zur Verfeinerung der Regelung sowie einer gleichbleibenden Regelgüte als PID-Regler oder auch als Zustandsregler ausgebildet sein, der des weiteren adaptiv ausgebildet ist, das heißt, sich ständig an die gegenwärtig gegebenen Bedingungen (zum Beispiel abweichende Fadenspannung, Lagerreibung etc.) anpaßt. Ebenso kann eine prädiktive Regelung, das heißt, unter Berücksichtigung eines vorab bekannten Verlaufes, vorgenommen werden. Durch weitere bekannte Regelprinzipien läßt sich eine immer weitere Verfeinerung der Regelgüte realisieren.

Der Sollverlauf der Fadenverlegung kann durch verschiedene, den Wicklungsaufbau der Kreuzspule begünstigende Parameter eingestellt werden. So läßt sich beispielsweise durch eine sich ändernde Amplitude eine Hubatmung des Fadenführers und damit eine Verringerung der Kantenhärte beziehungsweise Kantenwölbung der Kreuzspule erzielen. Des weiteren lassen sich verschiedenste Bewicklungsstrukturen wie Präzisions- oder Stufenpräzisionswicklungen ohne mechanische Einstellarbeiten realisieren. Ebenso ist die Verstellung der gewünschten Breite der Kreuzspule mit extrem geringem Aufwand verbunden.

Die Auswahl der Spiralfedern 20 und 21 kann so erfolgen, daß die Kennlinien nicht bis zu den Totpunkten geradlinig, sondern progressiv verlaufen, wodurch der elektromechanische Antrieb zur Erzielung der gleichen Schwingung entlastet wird. Dadurch ist die Schwingung dann auch nur noch annähernd harmonisch, was jedoch nicht stört, da der Schwingungsverlauf gleichmäßig bleibt.

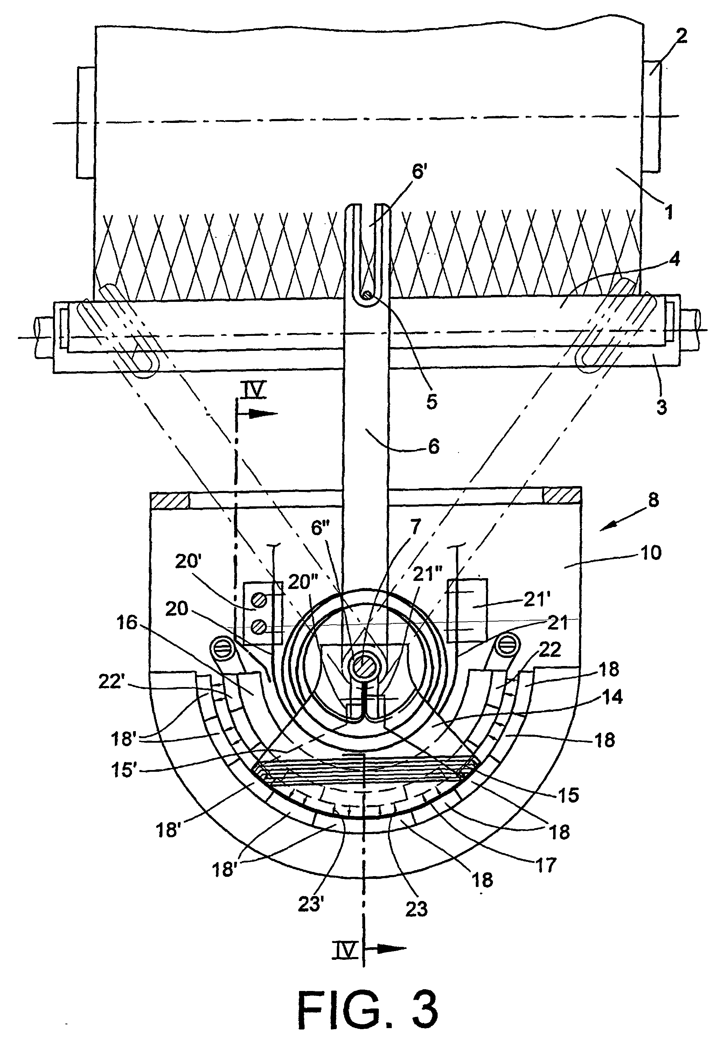

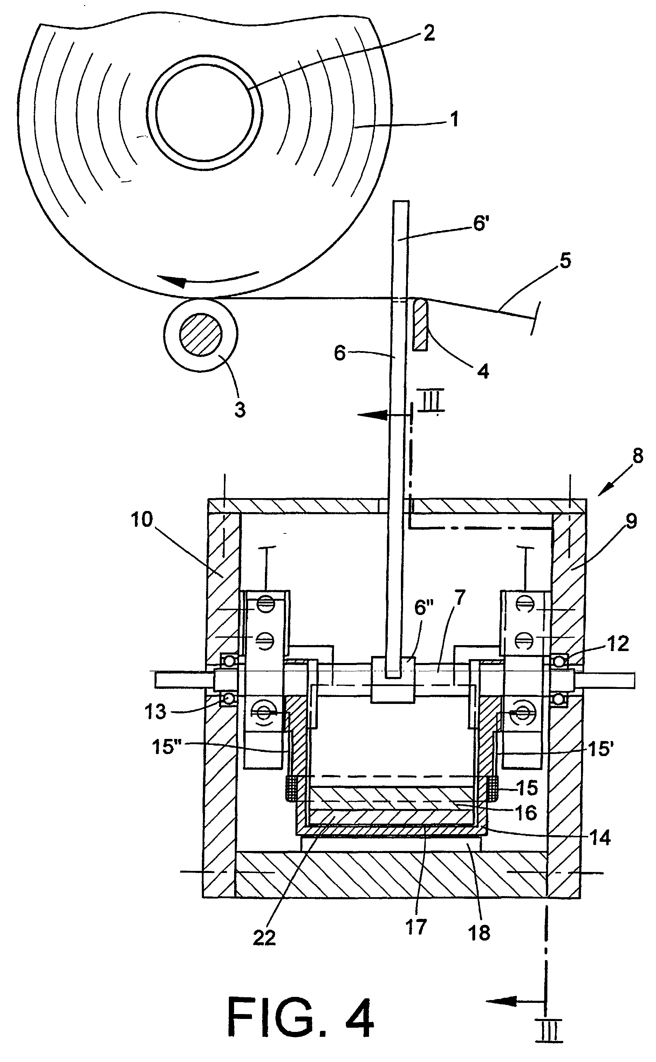

In einer in den Fig. 3 und 4 dargestellten Variante der Erfindung sind beidseits des Luftspaltes 17 Magnete 18, 18' und 22, 22' angeordnet. Dadurch wird die Magnetflußdichte im Luftspalt 17 weiter erhöht und damit auch ein höheres Moment auf den Fadenführer bei gleicher Bestromung und Dimensionierung der Spule 15 möglich. Selbstverständlich stehen sich links und rechts des Luftspaltes 17 jeweils Magente 18, 22 und 18', 22' mit unterschiedlicher Polarität gegenüber.

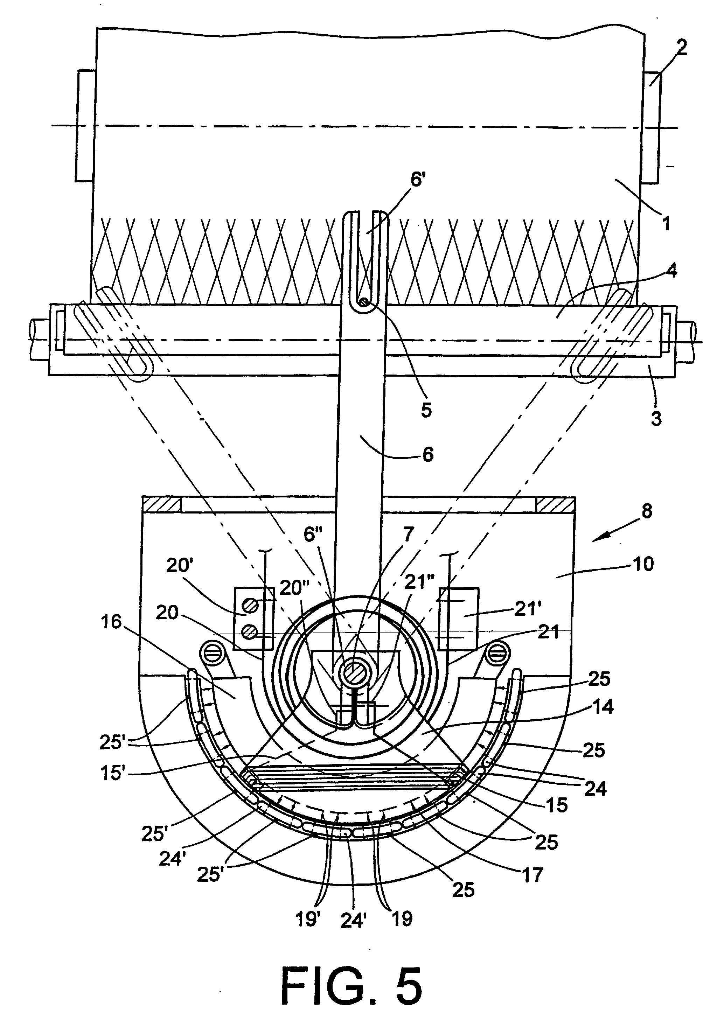

In einer nur in Vorderansicht in Fig. 5 dargestellten weiteren Variante der Erfindung sind gegenüber der ersten Variante die Permanentmagnete 18 und 18' durch Elektromagnete ersetzt, die durch Spulen 24, 24' mit Kernen 25, 25' gebildet sind. Die Stromzufuhr zu diesen Spulen ist hier nicht gesondert dargestellt. Die Spulen sind gegenüber den Seitenwänden 9 und 10 isoliert beziehungsweise sind diese Seitenwände aus nichtleitendem Material, zum Beispiel Kunststoff, gefertigt.

Durch die gebildeten Elektromagnete werden Magnetfeldlinien mit den bisherigen Beispielen entsprechenden Ausrichtungen ausgebildet. Jedoch kann ein noch stärkeres Magnetfeld erreicht werden, welches zum Beispiel in Abhängigkeit von der Belastung des Fadenführers 6, auch unterschiedlich eingestellt werden kann.

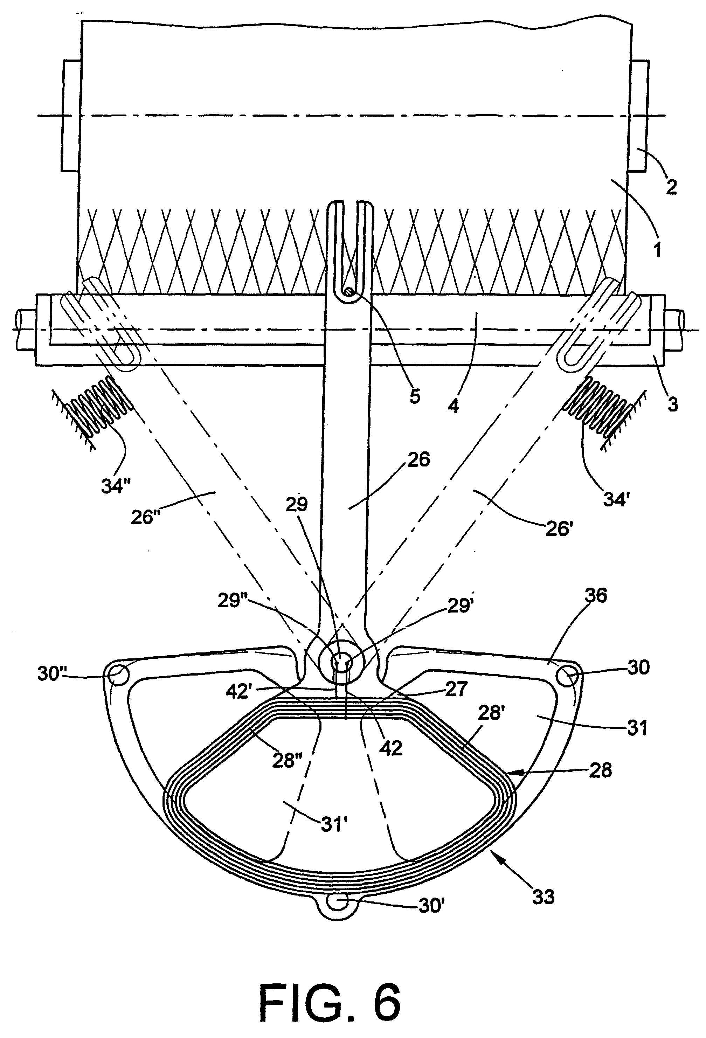

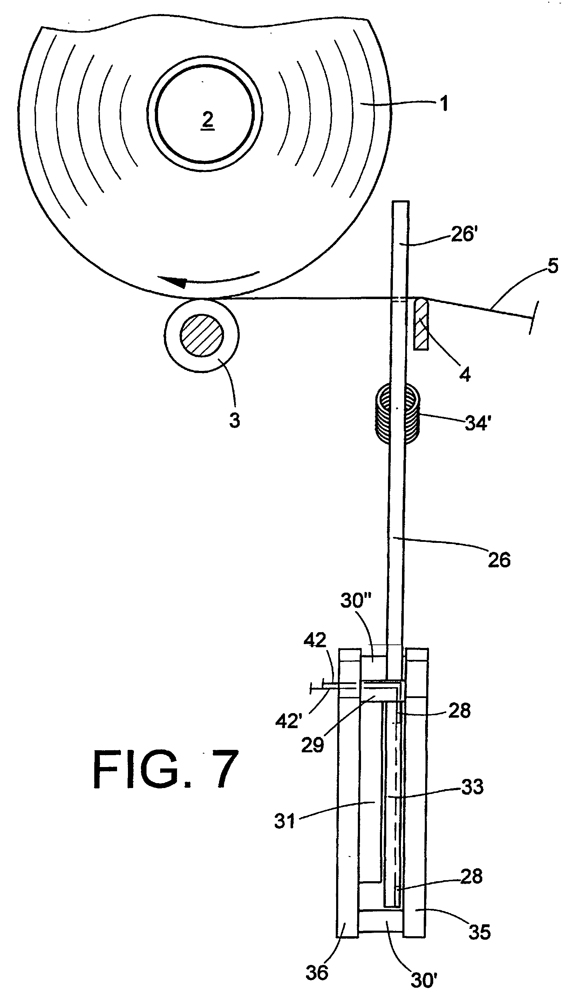

In den Fig. 6 und 7 ist eine von den bisherigen Ausführungsbeispielen deutlicher abweichende Variante dargestellt. Der Luftspalt ist hier gegenüber den bereits beschriebenen Varianten um 90 Grad gedreht, das heißt, er liegt in einer Ebene, die die Schwenkachse des Fadenführers 26 schneidet. Magnete 31 und 31' sind kreissegmentförmig ausgebildet und über zum Beispiel Schraubverbindungen 30, 30' und 30'' auf einem Magnetträger 36 befestigt, welcher gleichzeitig als als Joch dienende Seitenwand ausgebildet ist. Beiderseits der Anordnung der Magnete 31 und 31' sind demzufolge Joche 35 und 36 (Fig. 7) vorhanden, die den Magnetfluß möglichst ohne nennenswerte Verluste leiten sollen.

Auf dem Fadenführer 26 ist ebenfalls eine elektrische Spule 28 angeordnet, die, ähnlich wie die Magnete 31 und 31' weitestgehend die Form eines Kreissegmentes besitzt. Zuleitungen 42 und 42' sind hier zentral durch eine Welle 29 nach außen geführt, auf der der Fadenführer 26 befestigt ist. In diese Welle 29 sind hierfür Bohrungen 29' und 29'' eingebracht. Aufgrund der nahen Anordnung am Drehpunkt wird eine externe Stromzuführung, die hier nicht dargestellt ist, lediglich geringfügig durch die Schwingung des Fadenführers 26 ausgelenkt, so daß sich an deren Flexibilität keine allzu hohen Anforderungen knüpfen.

Druckfedern 34' und 34'' unterstützen die Bewegungsrichtungsumkehr des Padenführers 26 im Bereich der Totpunkte. Diese Druckfedern 34' und 34'' sind zur Hubveränderung mechanisch verstellbar.

Es ist selbstverständlich beim zuletzt dargestellten Verlegesystem ebenfalls möglich, anstelle der Druckfedern 34' und 34'' Spiralfedern, wie in den vorangegangenen Beispielen einzusetzen, die die bereits erwähnten Vorteile aufweisen.

Die Regelung des Antriebes erfolgt analog den bisherigen Beispielen. Ein Winkelaufnehmer in Form eines Inkrementalzählers ist hier nicht dargestellt und kann ebenfalls den bisherigen Beispielen entsprechen.

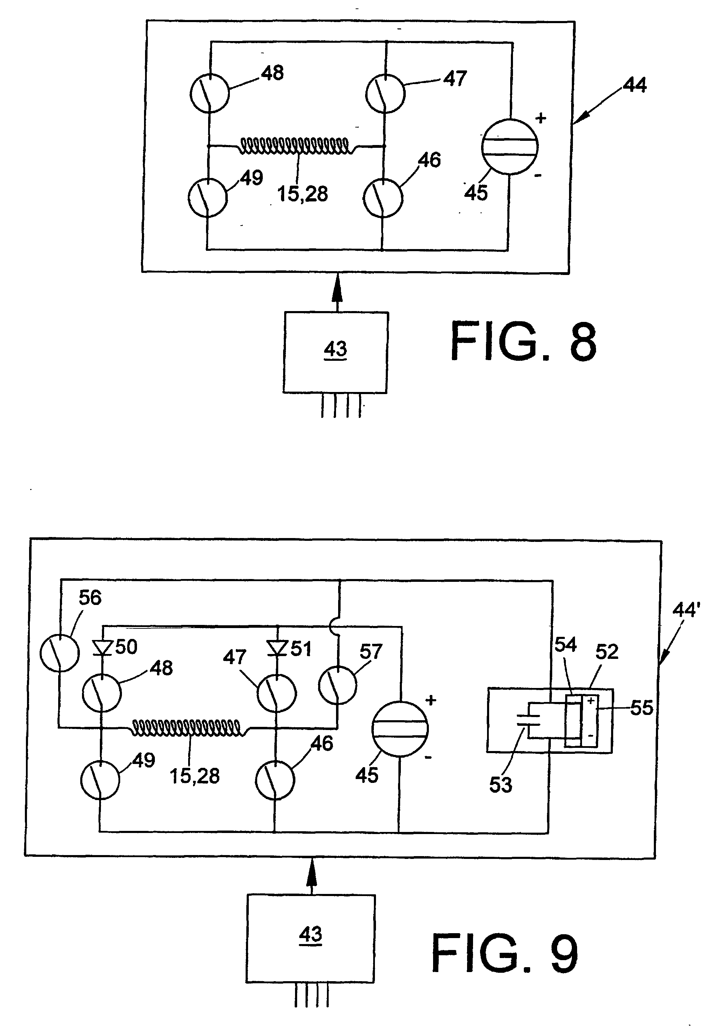

In Fig. 8 ist vereinfacht eine Endstufe 44 dargestellt, wie sie zur Spannungsversorgung der Spule 15 beziehungsweise 28 eingesetzt werden kann.

Während mit 45 eine Versorgungsspannungsquelle bezeichnet ist, sind Schalter 46 bis 48, die zum Beispiel durch Feldeffekttransistoren gebildet sind, zur Steuerung der Stromversorgung der Spule 15, 28 vorgesehen. Diese Schalter 46 bis 48 werden durch die Steuereinrichtung 43, wie durch Pfeil schematisch angedeutet ist, angesteuert. Dabei werden immer die Schalter 46 und 48 sowie 47 und 49 in gleicher Weise geschaltet. Durch Variation der jeweiligen Einschaltdauer wird die durch die Spannungsversorgungsquelle 45 vorgegebene Betriebsspannung gemäß Erfordernis moduliert. Diese Modulation beinhaltet sowohl den Betrag als auch das Vorzeichen der angelegten Spannung, um das in jedem Punkt der Schwingbewegung des Fadenführers erforderliche Moment zu erzeugen.

Die in Fig. 9 dargestellte Endstufe 44' ist um eine zweite Spannungsversorgungsquelle 52 ergänzt, die über Schalter 56 und 57 ebenfalls an die Spule 15, 28 anschließbar ist. Diese Schalter 56 und 57, ebenfalls Feldeffekttransistoren, werden auch von der Steuerungseinrichtung 43, wie bereits erwähnt vorzugsweise ein Mikroprozessor, angesteuert. Sie werden abwechselnd an den Umkehrpunkten des Fadenführers 6, 26 betätigt.

Die zweite Spannungsversorgungsquelle 52 stellt eine gegenüber der ersten Spannungsversorgungsquelle 45 mehrfache Spannung bereit. Dabei liegt entweder von vornherein eine höhere Betriebsspannung am Eingang 55 an oder wird mittels einer Ladungspumpe 54 im Kondensator 53 erzeugt. Die Ladungspumpe 54 ist vorteilhaft so eingestellt, daß sie den Kondensator 53 jeweils bis zum nächsten Schaltvorgang eines der beiden Schalter 56 oder 57 mit der erforderlichen Ladung versieht. Dazu kann die Ladungspumpe 54 ebenfalls von der Steuereinrichtung 43 in Abhängigkeit von der Fadenführerfrequenz eingestellt werden.

Durch die modifizierte Endstufe 44', die eine zweite Spannungsversorgungsquelle 52 besitzt, ist es möglich, in den Umkehrpunkten des Fadenführers schlagartig eine höhere Spannung zur Verfügung zu stellen, die einen schnelleren Anstieg des Stromflusses und damit des erzeugten Momentes bewirkt. Da diese zweite Versorgungsspannungsquelle 52 nur jeweils sehr kurzzeitig zugeschaltet ist, kann nahezu über den gesamten Schwingbereich des Fadenführers 6, 26 ausschließlich mit der Versorgungsspannungsquelle 45 mit einem wesentlich höheren Wirkungsgrad gearbeitet werden.

Um zu vermeiden, daß bei Zuschalten der zweiten Spannungsquelle 52 über die Schalter 47 bzw. 48 ein starker Strom zur ersten Spannungsversorgungsguelle 45 abfließt und zu Beschädigungen dieser Versorgungsspannungsquelle führen kann, sind entsprechende Dioden 50 und 51 zwischengeschaltet.

## Patentansprüche

1. Fadenführer zum traversierenden Zuführen eines Fadens zu einer rotierend angetriebenen Auflaufspule für die Erzeugung einer Kreuzspule in einer Spuleinrichtung einer Textilmaschine, wobei der Fadenführer fingerartig ausgebildet, um eine im wesentlichen senkrecht zur Auflaufspulenachse orientierte Drehachse schwenkbar ist und einen elektromechanischen Antrieb besitzt,
**dadurch gekennzeichnet,**
**daß** der elektromechanische Antrieb (15, 15', 15", 16, 16", 18, 18', 22, 22", 24, 24', 25, 25', 28, 31, 31', 35, 36) einen Luftspalt (17, 33) besitzt, welcher von Magnetfeldlinien (19, 19', 23, 23') durchdrungen ist,
**daß** entlang des Luftspaltes (17, 33) Magnete (18, 18'; 22, 22', 24, 24', 25, 25') angeordnet sind, die die im wesentlichen sich senkrecht durch den Luftspalt (17, 33) erstreckenden Magnetfeldlinien (19, 19', 23, 23') erzeugen, daß beidseits des Luftspaltes (17, 33) Joche (16, 16', 31, 31') zum Leiten des Magnetflusses angeordnet sind,
**daß** am Fadenführer (6, 26) mindestens eine elektrische Spule (15, 28) angeordnet ist, die in den Luftspalt (17, 33) eintaucht und während der Traversierbewegung des Fadenführers (6) entlang des Luftspaltes (17, 33) bewegbar ist und
**daß** die elektrische Spule (15, 28) gesteuert bestrombar ist.

2. Fadenführer nach Anspruch 1, **dadurch gekennzeichnet, daß** sich der Luftspalt (17, 33) über den Schwenkbereich der elektrischen Spule (15, 28) erstreckt, der dem maximal einstellbaren Traversierhub des Fadenführers (6, 26) entspricht.

3. Fadenführer nach Anspruch 1 oder 2, **dadurch gekennzeichnet, daß** alle Magnete (18, 18',24, 24', 25, 25') auf einer Seite des Luftspaltes (17, 33) angeordnet sind.

4. Fadenführer nach Anspruch 1 oder 2, **dadurch gekennzeichnet, daß** die Magnete (18, 18',22, 22') beidseitig des Luftspaltes (17) so angeordnet sind, daß sie sich mit entgegengesetzter Polarisierung direkt gegenüberstehen.

5. Fadenführer nach einem der Ansprüche 1 bis 4, **dadurch gekennzeichnet, daß** die Magnete (18, 18', 22, 22', 31, 31') Permanentmagnete sind.

6. Fadenführer nach einem der Ansprüche 1 bis 4, **dadurch gekennzeichnet, daß** die Magnete (24, 24',25, 25') Elektromagnete sind.

7. Fadenführer nach einem der Ansprüche 1 bis 6, **dadurch gekennzeichnet, daß** die Anordnung der Magnete (18, 18'; 22, 22', 24, 24', 25, 25') in der Mitte des Schwenkweges geteilt und deren Polarisierung so gewählt ist, daß sich in den beiden Teilabschnitten des Luftspaltes (17 33) entgegengesetzte Magnetflußrichtungen ergeben, daß sich durch jeden der Teilabschnitte ein Wicklungsstrang (15', 15", 28', 28 ") der elektrischen Spule erstreckt, der über den gesamten Schwenkweg des Fadenführers (6, 26) in diesem Teilabschnitt verbleibt und daß die beiden Wicklungsstränge (15',15", 28', 28 ") in entgegengesetzten Richtungen stromdurchflossen sind.

8. Fadenführer nach einem der Ansprüche 1 bis 7, **dadurch gekennzeichnet, daß** der Luftspalt (17) zur Drehachse des Fadenführers (6) konzentrisch angeordnet ist und die Mittelachse der elektrischen Spule (15) die Drehachse des Fadenführers (6) in einem rechten Winkel schneidet.

9. Fadenführer nach Anspruch 8, **dadurch gekennzeichnet, daß** die elektrische Spule (15) im wesentlichen rechteckig ist und daß zwei parallele Seiten (15',15") des durch die Wicklungsstränge gebildeten Rechtecks im Luftspalt (17) verlaufen, während die beiden anderen, die ersten miteinander verbindenden parallelen Seiten (15'''), 15'''')außerhalb des Luftspaltes (17) angeordnet sind.

10. Fadenführer nach einem der Ansprüche 1 bis 7, **dadurch gekennzeichnet, daß** der Luftspalt (33) rechtwinklig zur Drehachse des Fadenführers (26) als Kreissegment angeordnet und ausgebildet ist und die Wicklungsebene in der durch den Luftspalt (269 aufgespannten Ebene liegt.

11. Fadenführer nach Anspruch 10, **dadurch gekennzeichnet, daß** die elektrische Spule (28) im wesentlichen die Form eines Kreissegmentes aufweist und zwei radial verlaufende Wicklungsstränge (28', 28") besitzt.

12. Fadenführer nach einem der Ansprüche 1 bis 11, **dadurch gekennzeichnet, daß** zur gesteuerten Bestromung der elektrischen Spule (15, 28) eine Steuereinrichtung (43) vorhanden ist, die in Abhängigkeit von der jeweiligen Stellung des Fadenführers (6, 26) einen Endstufe (44, 44') beaufschlagt, die an die elektrische Spule (15, 28) eine mit dem angestrebten Bewegungsablauf in Betrag und Vorzeichen korrelierende Spannung anlegt.

13. Fadenführer nach Anspruch 12, **dadurch gekennzeichnet, daß** die Endstufe (44, 44') eine Versorgungsspannungsquelle (45) besitzt, die über durch die Steuereinrichtung (43) angesteuerte Schalter (46 bis 48) die elektrische Spule (15, 28) mittels Pulsweitenmodulation mit der jeweils erforderlichen Spannung versorgt.

14. Fadenführer nach Anspruch 12 oder 13, **dadurch gekennzeichnet, daß** die Endstufe (44') eine zweite Versorgungsspannungsquelle (52) besitzt, an der eine gegenüber der ersten Versorgungsspannungsquelle (45) mehrfache Betriebsspannung bereitsteht und daß die zweite Versorgungsspannungsquelle (52) während des Aufenthaltes des Fadenführers (6, 26) in der Nähe seiner Umkehrpunkte durch die Steuereinrichtung (43) auf die elektrische Spule (15, 28) schaltbar ist.

15. Fadenführer nach Anspruch 14, **dadurch gekennzeichnet, daß** die zweite Versorgungsspannungsquelle (52) einen Kondensator (53) besitzt, dessen Kapazität dem Energiebedarf der Endstufe (44') während der Zuschaltdauer der zweiten Versorgungsspannungsquelle (52) entspricht.

16. Fadenführer nach Anspruch 15, **dadurch gekennzeichnet, daß** die zweite Spannungsquelle (52) eine Ladungspumpe (54) zum jeweiligen Aufladen des Kondensators (53) besitzt.

17. Fadenführer nach Anspruch 16, **dadurch gekennzeichnet, daß** die Ladungspumpe (54) durch die Steuereinrichtung (43) so ansteuerbar ist, daß die erforderliche Ladedauer der Zeit zwischen zwei aufeinanderfolgenden Freischaltungen entspricht.

18. Fadenführer nach einem der Ansprüche 1 bis 17, **dadurch gekennzeichnet, daß** beidseits im Endbereich des Traversierhubes mechanische Energiespeicher (34', 34") zur Unterstützung der Bewegungsrichtungsumkehr des Fadenführers (26) vorhanden sind.

19. Fadenführer nach einem der Ansprüche 1 bis 18, **dadurch gekennzeichnet, daß** der Fadenführer (6) dauerhaft während der gesamten Traversierbewegung mit mindestens einem Energiespeicher (20, 21) dessen potentielle Energie von der Mitte des Traversierhubes nach den Totpunkten hin stetig zunimmt und der dadurch mit dem Fadenführer (6) ein im wesentlichen harmonisch oszillierendes mechanisches System bildet, und daß der elektromechanische Antrieb (15, 15', 15", 16, 16', 18, 18', 22, 22', 24, 24', 25 25') gezielt die zur Erzeugung einer vorgebbaren Schwingung erforderlichen Momente dem System aufprägt.

20. Fadenführer nach Anspruch 19, **dadurch gekennzeichnet, daß** der mindestens eine Energiespeicher durch die Feder (20, 21) gebildet ist.

21. Fadenführer nach Anspruch 20, **dadurch gekennzeichnet, daß** die Feder (20, 21) eine Drehfeder ist.

22. Fadenführer nach Anspruch 21, **dadurch gekennzeichnet, daß** die Drehfeder (20, 21) eine Spiralfeder, insbesondere aus Bandmaterial, ist.

23. Fadenführer nach Anspruch 22, **dadurch gekennzeichnet, daß** zwei Spiralfedern (20, 21) vorhanden sind.

24. Fadenführer nach Anspruch 23, **dadurch gekennzeichnet, daß** die Windungsrichtung der Spiralfeder (20, 21) entgegengesetzt ist.

25. Fadenführer nach Anspruch 23 oder 24, **dadurch gekennzeichnet, daß** die Spiralfeder (20, 21) der Stromzuführung dienen.

## Claims

1. Thread guide for the traversing feed of a thread to a take-up bobbin driven in a rotary manner to produce a cross-wound bobbin in a winding device of a textile machine, the thread guide being formed in a finger-like manner, being pivotable about an axis of rotation oriented substantially perpendicularly to the axis of the take-up bobbin and having an electromechanical drive, **characterised in that** the electromechanical drive (15, 15', 15'', 16, 16', 18, 18', 22, 22', 24, 24', 25, 25', 28, 31, 31', 35, 36) has an air gap (17, 33) penetrated by magnetic field lines (19, 19', 23, 23'), **in that** arranged along the air gap (17, 33) are magnets (18, 18'; 22, 22', 24, 24', 25, 25') producing the magnetic field lines (19, 19', 23, 23') extending substantially perpendicularly through the air gap (17, 33), **in that** yokes (16, 16', 31, 31') for guiding the magnetic flow are arranged on either side of the air gap (17, 33), **in that** arranged on the thread guide (6, 26) is at least one electric bobbin (15, 28) which dips into the air gap (17, 33) and can be moved along the air gap (17, 33) during the traversing movement of the thread guide (6) and **in that** the electric bobbin (15, 28) can be supplied with current in a controlled manner.

2. Thread guide according to claim 1, **characterised in that** the air gap (17, 33) extends over the pivotal range of the electric bobbin (15, 28) corresponding to the maximum adjustable traversing lift of the thread guide (6, 26).

3. Thread guide according to claim 1 or 2, **characterised in that** all the magnets (18, 18', 24, 24', 25, 25') are arranged on one side of the air gap (17, 33).

4. Thread guide according to claim 1 or 2, **characterised in that** the magnets (18, 18', 22, 22') are arranged on either side of the air gap (17) in such a way that they directly oppose one another with opposite polarisation.

5. Thread guide according to any one of claims 1 to 4, **characterised in that** the magnets (18, 18', 22, 22', 31, 31') are permanent magnets.

6. Thread guide according to any one of claims 1 to 4, **characterised in that** the magnets (24, 24', 25, 25') are electromagnets.

7. Thread guide according to any one of claims 1 to 6, **characterised in that** the arrangement of the magnets (18, 18'; 22, 22', 24, 24', 25, 25') is divided in the centre of the pivoting path and the polarisation thereof is selected such that opposing magnet flow directions are produced in the two sections of the air gap (17, 33), **in that** a winding strand (15', 15'', 28', 28'') of the electric bobbin extends through each of the sections and remains in this section over the entire pivoting path of the thread guide (6, 26) and **in that** the current is passed through the two winding strands (15', 15'', 28', 28'') in opposite directions.

8. Thread guide according to any one of claims 1 to 7, **characterised in that** the air gap (17) is arranged concentrically to the axis of rotation of the thread guide (6) and the central axis of the electric bobbin (15) intersects the axis of rotation of the thread guide (6) at a right angle.

9. Thread guide according to claim 8, **characterised in that** the electric bobbin (15) is substantially rectangular and **in that** two parallel sides (15', 15'') of the rectangle formed by the winding strands extend in the air gap (17), while the other two parallel sides (15''', 15'''') connecting the first sides to one another are arranged outside the air gap (17).

10. Thread guide according to any one of claims 1 to 7, **characterised in that** the air gap (33) is arranged and formed as a circular segment at right angles to the axis of rotation of the thread guide (26) and the winding plane is in the plane spanned by the air gap (269).

11. Thread guide according to claim 10, **characterised in that** the electric bobbin (28) substantially has the form of a circular segment and comprises two radially extending winding strands (28', 28").

12. Thread guide according to any one of claims 1 to 11, **characterised in that** a control device (43) is available to provide the electric bobbin (15, 28) with current in a controlled manner, the control device loading an end stage (44, 44') as a function of the current position of the thread guide (6, 26) and applying a voltage correlating with the desired movement course with respect to amount and polarity sign to the electric bobbin (15, 28).

13. Thread guide according to claim 12, **characterised in that** the end stage (44, 44') has a supply voltage source (45) which via switches (46 to 48) controlled by the control device (43), supplies the electric bobbin (15, 28) with the respective required voltage by means of pulse-width modulation.

14. Thread guide according to claim 12 or 13, **characterised in that** the end stage (44') has a second supply voltage source (52), at which relative to the first supply voltage source (45) there is available a multiple operating voltage and **in that** the second supply voltage source (52) can be switched to the electric bobbin (15, 28) by the control device (43) while the thread guide (6, 26) resides close to its return points.

15. Thread guide according to claim 14, **characterised in that** the second supply voltage source (52) has a capacitor (53), the capacity of which corresponds to the energy requirement of the end stage (44') during the connection time of the second supply voltage source (52).

16. Thread guide according to claim 15, **characterised in that** the second voltage source (52) has a charge pump (54) for the respective loading of the capacitor (53).

17. Thread guide according to claim 16, **characterised in that** the charge pump (54) can be controlled by the control device (43), such that the required charging time corresponds to the time between two consecutive connections.

18. Thread guide according to any one of claims 1 to 17, **characterised in that** there are mechanical energy stores (34', 34'') to assist the movement direction return of the thread guide (26) on either side in the end region of the traverse.

19. Thread guide according to any one of claims 1 to 18, **characterised in that** during the entire traversing movement the thread guide (6) with at least one energy store (20, 21) continuously and constantly increases the potential energy thereof from the centre of the traverse toward the dead centres and which energy store (20, 21) with the thread guide (6) therefore forms a substantially harmonically oscillating mechanical system and **in that** the electromechanical drive (15, 15', 15", 16, 16', 18, 18', 22, 22', 24, 24', 25, 25') purposefully impresses on the system the moments required to produce a presettable oscillation.

20. Thread guide according to claim 19, **characterised in that** the at least one energy store is formed by the spring (20, 21).

21. Thread guide according to claim 20, **characterised in that** the spring (20, 21) is a torsion spring (22).

22. Thread guide according to claim 21, **characterised in that** the torsion spring (20, 21) is a helical spring, in particular made of strip material.

23. Thread guide according to claim 22, **characterised in that** there are two helical springs (20, 21).

24. Thread guide according to claim 23, **characterised in that** the winding direction of the helical springs (20, 21) is reversed.

25. Thread guide according to claim 23 or 24, **characterised in that** the helical springs (20, 21) are used to supply current.

## Revendications

1. Guide-fil pour l'amenée traversante d'un fil vers une bobine réceptrice entraînée en rotation pour fabriquer une bobine à spires croisées sur un bobinoir d'une machine textile, le guide-fil étant réalisé à la manière d'un doigt, pivotable autour d'un axe de rotation orienté essentiellement perpendiculairement à l'axe de la bobine réceptrice et possédant un entraînement électromécanique, **caractérisé en ce que** l'entraînement électromécanique (15, 15', 15", 16, 16', 18, 18', 22, 22', 24, 24', 25, 25', 28, 31, 31', 35, 36) comporte un entrefer (17, 33) qui est traversé par des lignes de champ magnétique (19, 19', 23, 23'), **en ce que** des aimants (18, 18' ; 22, 22', 24, 24', 25, 25') sont disposés le long de l'entrefer (17, 33), qui produisent des lignes de champ magnétique (19, 19', 23, 23') s'étendant essentiellement perpendiculairement à travers l'entrefer (17, 33), **en ce que** de part et d'autre de l'entrefer (17, 33) se trouvent des culasses (16, 16', 31, 31') pour guider le flux magnétique, **en ce qu'**au moins une bobine électrique (15, 28) est placée sur le guide-fil (6, 26), qui pénètre dans l'entrefer (17, 33) et est déplaçable le long de l'entrefer (17, 33) pendant la traversée du guide-fil (6), et **en ce que** la bobine électrique (15, 28) peut être alimentée en courant par commande ciblée.

2. Guide-fil selon la revendication 1, **caractérisé en ce que** l'entrefer (17, 33) s'étend sur la zone de pivotement de la bobine électrique (15, 28), qui correspond à la traversée maximale réglable du guide-fil (6, 26).

3. Guide-fil selon la revendication 1 ou 2, **caractérisé en ce que** tous les aimants (18, 18', 24, 24', 25, 25') sont placés d'un côté de l'entrefer (17, 33).

4. Guide-fil selon la revendication 1 ou 2, **caractérisé en ce que** les aimants (18, 18', 22, 22') sont disposés de part et d'autre de l'entrefer (17) de telle sorte qu'ils se font directement face avec une polarité opposée.

5. Guide-fil selon l'une des revendications 1 à 4, **caractérisé en ce que** les aimants (18, 18', 22, 22', 31, 31') sont des aimants permanents.

6. Guide-fil selon l'une des revendications 1 à 4, **caractérisé en ce que** les aimants (24, 24', 25, 25') sont des électroaimants.

7. Guide-fil selon l'une des revendications 1 à 6, **caractérisé en ce que** les aimants (18, 18', 22, 22', 24, 24', 25, 25') sont répartis de part et d'autre du milieu de la course de pivotement et **en ce que** leur polarité est choisie de telle manière qu'il en résulte des sens de flux magnétique opposés dans les deux segments de l'entrefer (17, 33), **en ce qu'**un brin du bobinage (15', 15", 28', 28") de la bobine électrique s'étend à travers chacun des segments, lequel brin reste dans ce segment sur l'ensemble du pivotement du guide-fil (6, 26), et **en ce que** les deux brins du bobinage (15', 15", 28', 28") sont parcourus par le courant dans des sens opposés.

8. Guide-fil selon l'une des revendications 1 à 7, **caractérisé en ce que** l'entrefer (17) est disposé de façon concentrique par rapport à l'axe de rotation du guide-fil (6) et **en ce que** l'axe médian de la bobine électrique (15) coupe l'axe de rotation du guide-fil (6) à angle droit.

9. Guide-fil selon la revendication 8, **caractérisé en ce que** la bobine électrique (15) est essentiellement rectangulaire et **en ce que** deux côtés parallèles (15', 15") du rectangle formé par les brins du bobinage s'étendent dans l'entrefer (17), tandis que les deux autres côtés (15"', 15"") parallèles reliant les premiers entre eux se trouvent en dehors de l'entrefer (17).

10. Guide-fil selon l'une des revendications 1 à 7, **caractérisé en ce que** l'entrefer (33) est réalisé en forme de secteur de cercle et disposé perpendiculairement à l'axe de rotation du guide-fil (26), et **en ce que** le plan du bobinage est situé dans le plan formé par l'entrefer (33).

11. Guide-fil selon la revendication 10, **caractérisé en ce que** la bobine électrique (28) présente pour l'essentiel la forme d'un secteur de cercle et possède deux brins de bobinage (28', 28") s'étendant radialement.

12. Guide-fil selon l'une des revendications 1 à 11, **caractérisé en ce qu'**un dispositif de commande (43) est prévu pour l'alimentation commandée en courant de la bobine électrique (15, 28), qui, en fonction de la position du guide-fil (6, 26), sollicite un transformateur de sortie (44, 44') qui applique à la bobine électrique (15, 28) une tension correspondant en termes de valeur et de signe avec le mouvement recherché.

13. Guide-fil selon la revendication 12, **caractérisé en ce que** le transformateur de sortie (44, 44') possède une source de tension d'alimentation (45) qui fournit à la bobine électrique (15, 28), par l'intermédiaire d'interrupteurs (46 à 48) commandés par le dispositif de commande (43) la tension nécessaire par modulation d'impulsions en largeur.

14. Guide-fil selon la revendication 12 ou 13, **caractérisé en ce que** le transformateur de sortie (44') possède une deuxième source de tension d'alimentation (52) qui fournit une tension d'exploitation qui est un multiple de celle délivrée par la première source de tension d'alimentation (45), et **en ce que** la seconde source de tension d'alimentation (52) peut être couplée à la bobine électrique (15, 28) par le dispositif de commande (43) pendant que le guide-fil (6, 26) se trouve à proximité des points où il revient en arrière.

15. Guide-fil selon la revendication 14, **caractérisé en ce que** la seconde source de tension d'alimentation (52) possède un condensateur (53) dont la capacité correspond au besoin en énergie du transformateur de sortie (44') pendant la durée de la mise en circuit de la seconde source de tension d'alimentation (52).

16. Guide-fil selon la revendication 15, **caractérisé en ce que** la seconde source de tension d'alimentation (52) possède une pompe de charge (54) pour charger le condensateur (53).

17. Guide-fil selon la revendication 16, **caractérisé en ce que** la pompe de charge (54) peut être actionnée par le dispositif de commande (43) de telle manière que le temps nécessaire pour la charge correspond à l'intervalle de temps entre deux déconnexions successives.

18. Guide-fil selon l'une des revendications 1 à 17, **caractérisé en ce qu'**à chaque extrémité de la traversée, des accumulateurs d'énergie mécaniques (34', 34") sont prévus pour aider à inverser le sens de déplacement du guide-fil (26).

19. Guide-fil selon l'une des revendications 1 à 18, **caractérisé en ce que** le guide-fil (6) est accouplé en permanence pendant toute la traversée, à au moins un accumulateur d'énergie (20, 21) dont l'énergie potentielle augmente à partir du milieu de la traversée en direction des points morts et qui forme de ce fait avec le guide-fil (6) un système mécanique oscillant essentiellement de façon harmonique, et **en ce que** l'entraînement électromécanique (15, 15', 15", 16, 16', 18, 18', 22, 22', 24, 24', 25, 25') applique de façon ciblée au système les couples nécessaires à la formation d'une oscillation prédéfinissable.

20. Guide-fil selon la revendication 19, **caractérisé en ce qu'**un accumulateur d'énergie au moins est constitué par le ressort (20, 21).

21. Guide-fil selon la revendication 20, **caractérisé en ce que** le ressort (20, 21) est un ressort de torsion.

22. Guide-fil selon la revendication 21, **caractérisé en ce que** le ressort de torsion (20, 21) est un ressort en spirale, notamment constitué d'un matériau en bande.

23. Guide-fil selon la revendication 22, **caractérisé en ce que** deux ressorts en spirale (20, 21) sont prévus.

24. Guide-fil selon la revendication 23, **caractérisé en ce que** les ressorts en spirale (20, 21) présentent des sens d'enroulement antagonistes.

25. Guide-fil selon la revendication 23 ou 24, **caractérisé en ce que** les ressorts en spirale (20, 21) servent à l'alimentation en courant.
